# FASCICULE DE BREVET EUROPEEN

(11) **EP 0 586 289 B1**
(45) Date de publication et mention de la délivrance du brevet: **23.10.1996**
(21) Numéro de dépôt: 93402105.6
(22) Date de dépôt: 26.08.1993
(51) Int. Cl.: B60S 5/00, B60B 29/00

(54) **Dispositif de contrôle de train roulant**
Fahrzeugachsenprüfeinrichtung
Vehicle axle testing device

(30) Priorité: 04.09.1992 FR 9210606
(43) Date de publication de la demande: 09.03.1994
(73) Titulaire: FACOM, Société dite:, F-91423 Morangis Cédex (FR)
(72) Inventeur: Hennes, Jacques, F-27530 Ezy sur Eure (FR); Ancelin, Jean-Pierre, F-27650 Mesnil sur l'Estree (FR)
(74) Mandataire: Jacobson, Claude

(56) Documents cités:
- PATENT ABSTRACTS OF JAPAN vol. 2, no. 95 (M-78)9 Aoüt 1978 & JP-A-53 063 677 (HITACHI) 7 Juin 1978
- PATENT ABSTRACTS OF JAPAN vol. 9, no. 139 (M-387)(1862) 14 Juin 1985 & JP-A-60 018 405 (NISSAN) 30 Janvier 1985
- PATENT ABSTRACTS OF JAPAN vol. 10, no. 231 (M-506)(2287) 12 Aoüt 1986 & JP-A-61 064 502 (TOYOTA) 2 Avril 1986
- PATENT ABSTRACTS OF JAPAN vol. 6, no. 17 (M-109)30 Janvier 1982 & JP-A-56 135 302 (NISSAN) 22 Octobre 1981
- Beissbarth Rohé Drucknorm 1044/07.91, page 10

## Description

La présente invention est relative à un dispositif de contrôle de train roulant du type décrit dans le préambule de la revendication 1.

Les dispositifs de contrôle de train roulant doivent pouvoir être utilisés sans démontage des roues. Si l'on veut, pour réduire le temps nécessaire au contrôle, éviter toute opération de "dévoilage" consistant à effectuer deux mesures dans deux positions angulaires des roues décalées de 180°, il faut que le support du dispositif de contrôle puisse prendre appui de façon fiable sur une surface sans voile, en pratique sur le moyeu de roue.

Le document Beissbarth Rohé "Drucknorm 1044/07.91 montre un dispositif du type précité, dont la mise en place sur une roue est relativement compliquée et peu commode.

L'invention a pour but de simplifier le montage du dispositif sur la roue, et ce de façon économique.

A cet effet, l'invention a pour objet un dispositif de contrôle de train roulant, du type précité, caractérisé par la partie caractérisante de la revendication 1.

D'autres caractéristiques sont décrites dans les revendications 2 à 9.

Des exemples de réalisation de l'invention vont maintenant être décrits en regard des dessins annexés, sur lesquels :
- la Figure 1 représente schématiquement un premier mode de réalisation du support conforme à l'invention, au repos;
- la Figure 2 est une vue analogue de ce support monté sur une roue d'un train roulant à contrôler;
- les Figures 3 et 4 sont des vues analogues respectivement aux Figures 1 et 2, relatives à un deuxième mode de réalisation du support conforme à l'invention; et
- les Figures 5 et 6 sont des vues analogues respectivement aux Figures 1 et 2, relatives à un troisième mode de réalisation du support conforme à l'invention.

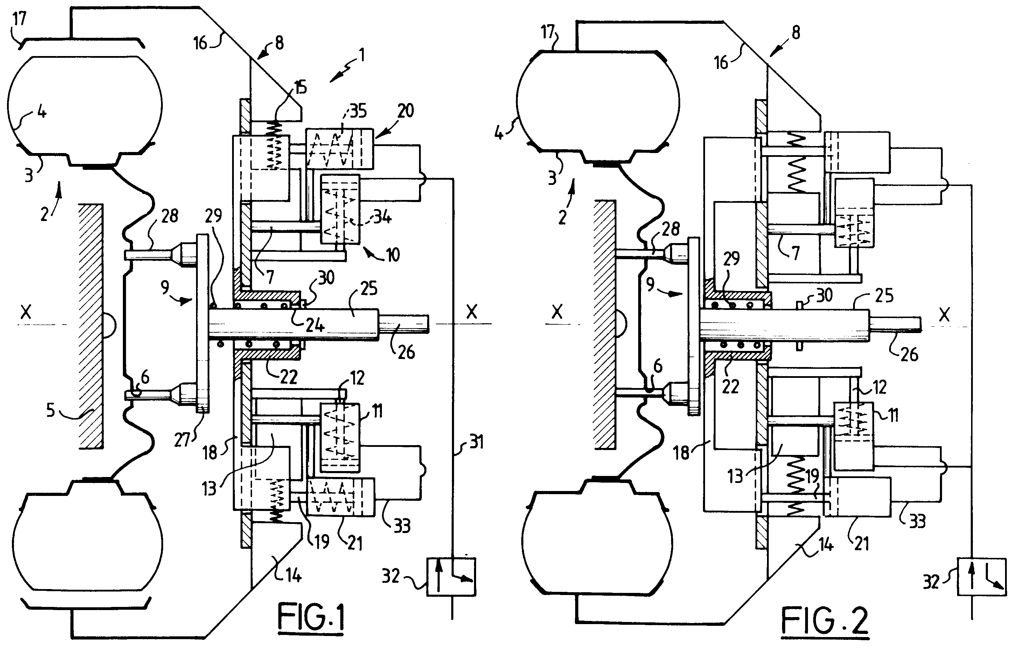

Le support 1 représenté sur la Figure 1 est destiné à porter un dispositif de mesure (non représenté) servant à contrôler la géométrie d'un train roulant dont fait partie une roue 2 constituée d'une jante 3 et d'un pneu 4 porté par celle-ci. La jante est fixée sur un moyeu 5 d'axe X-X supposé horizontal, au moyen d'une couronne de boulons non représentés. Ces boulons traversent des trous de la jante, laquelle comporte d'autres trous 6, par exemple au nombre de 3, 4 ou 5 et situés à la même distance de l'axe X-X que les trous de boulons. Le support 1 permet de monter le dispositif de mesure de manière parfaitement coaxiale à l'axe X-X.

Le support 1 comporte un cadre de montage 7, un dispositif 8 d'accrochage de ce cadre sur la roue, et un dispositif 9 d'appui du support sur le moyeu.

Dans ce qui suit, on appellera "avant" le côté du support tourné vers la roue, et "arrière" le côté opposé.

Le dispositif d'accrochage 8 comprend deux ensembles symétriques par rapport à l'axe X-X, comprenant chacun un vérin à fluide 10 d'orientation radiale dont le corps 11 est fixé au cadre 7 et dont la tige de piston 12 fait saillie vers l'axe X-X. L'extrémité libre de cette tige est rigidement reliée à un coulisseau 13 monté radialement coulissant sur le cadre 7, dans une glissière non représentée de ce dernier. Dans la partie radialement extérieure de la même glissière coulisse un bloc 14 relié au coulisseau par un ressort 15. Un bras 16 d'accrochage sur le pneu 2, muni à son extrémité libre d'une griffe 17, est rigidement relié au bloc 14.

Le dispositif d'appui 9 comprend :
- un croisillon 18 de poussée, relié rigidement à la tige de piston 19 de plusieurs vérins de poussée 20 dont le corps 21 est fixé sur le cadre 7 et dont l'axe est parallèle à l'axe X-X. En son centre, le croisillon 18 comporte du côté arrière une douille cylindrique borgne 22 d'axe X-X qui coulisse dans le cadre 7 et est ouverte vers l'avant, le fond 23 de cette douille comportant un orifice 24.

Un arbre central cylindrique 25 traverse la douille 22, est guidé à coulissement dans l'orifice 24 et définit à son extrémité arrière une portée cylindrique 26 de diamètre réduit sur laquelle peut se fixer le dispositif de mesure. A son autre extrémité, l'arbre 25 porte un plateau radial 27 sur laquelle font saillie vers l'avant une couronne de doigts d'appui 28 parallèles à l'axe X-X et en nombre au plus égal à celui des trous 6 de la jante. Un ressort de compression 29 est disposé autour de l'arbre 25 et prend appui d'une part sur le plateau 27, d'autre part sur le fond 23. L'avance de l'arbre 25 par rapport au croisillon 18 sous l'effet du ressort 29 est limitée par la venue d'une goupille diamétrale 30 traversant l'arbre 25 contre le fond 23 de la douille 22.

L'alimentation en fluide moteur, notamment en air comprimé, s'effectue par l'intermédiaire d'une conduite 31 reliée en parallèle au fond du corps 11 des deux vérins 10 et munie d'une vanne de commande 32 à deux positions (alimentation et mise à l'air). Par ailleurs, un point intermédiaire de chaque corps 11 est relié en permanence au fond du corps 21 d'au moins un vérin 20 par une conduite 33.

Les vérins 10 et 20 sont à simple effet et sont rappelés vers leur position rétractée par des ressorts, 34 et 35 respectivement.

Le fonctionnement du support ainsi décrit est le suivant.

Au départ (Figure 1), la vanne 32 est dans sa position "mise à l'air". Les vérins 10 et 20 sont donc tous rétractés, de sorte que les bras 16 se trouvent dans leur position radialement la plus extérieure, dans laquelle l'écartement des deux griffes 17 est supérieur au diamètre extérieur du pneu 4, et que le croisillon 18 se trouve dans sa position la plus reculée, par exemple en appui sur le cadre 7. De plus, la compression du ressort 29 maintient la collerette 30 de l'arbre 25 en appui contre le fond 23 de la douille 22.

Dans cet état, le support 1 est amené devant la roue, et les doigts 28 sont légèrement insérés, pratiquement sans jeu, dans les trous 6 correspondants de la jante, jusqu'à ce que les griffes 17 se trouvent en regard du pneu.

La vanne 32 est alors commutée en position "alimentation", ce qui provoque dans un premier temps l'alimentation des deux vérins 10. L'extension de ceux-ci amène les griffes 17 en prise ferme sur le pneu, et, à partir de ce moment, c'est la roue elle-même qui porte l'ensemble du support 1.

Lorsque les pistons des vérins 10 ont parcouru une course prédéterminée, ils découvrent les orifices des conduites 33, et la pression est alors communiquée simultanément à tous les vérins 20. Ceux-ci provoquent donc le déplacement vers l'avant du croisillon 18, lequel, en comprimant le ressort 29, pousse à son tour les doigts 28 à travers les trous 6 jusqu'à ce qu'ils prennent appui sur la surface en regard du moyeu 5.

Dans la position finale ainsi atteinte, tous les doigts trouvent un appui certain sur le moyeu, ce qui garantit une parfaite coaxialité de la portée 26 avec l'axe X-X. Le dispositif de mesure peut alors être monté sur cette portée en vue d'effectuer un contrôle fiable du train roulant, sans qu'aucun "dévoilage" soit nécessaire.

Lorsque le contrôle du train roulant est terminé, la commutation de la vanne 32 permet aux vérins 10 et 20 de se rétracter sous l'effet de leur ressort de rappel, afin de retirer le support 1 de la roue. Si on le désire, des moyens (non représentés) peuvent être prévus pour assurer le retrait séquentiel des vérins 20 puis des vérins 10.

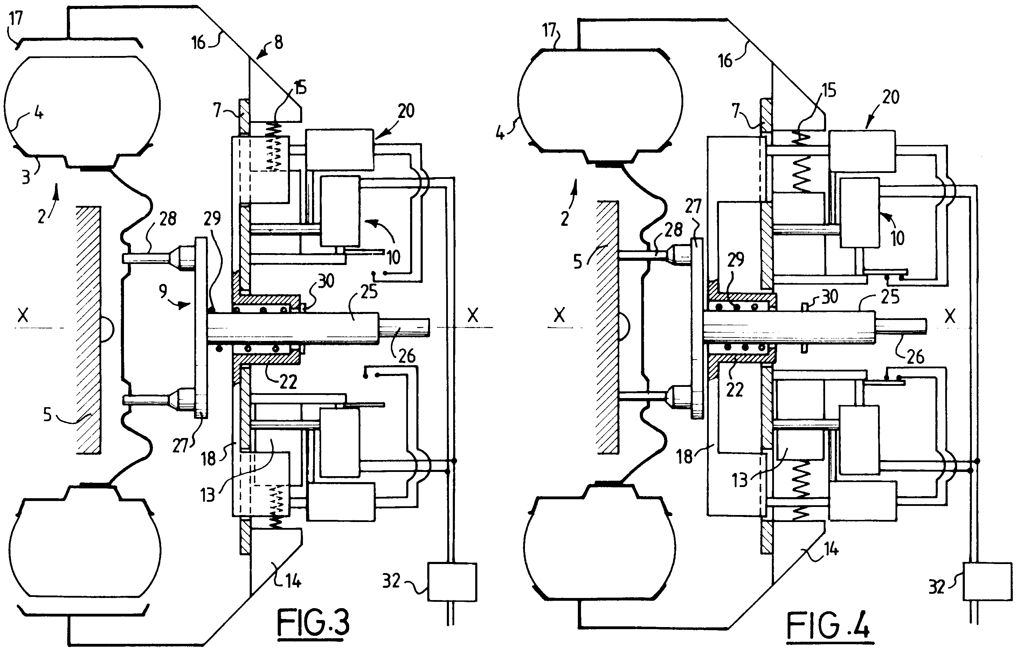

Le mode de réalisation des Figures 3 et 4 ne diffère de celui des Figures 1 et 2 que par le remplacement des vérins à fluide par des vérins à vis à entraînement électrique. Les éléments correspondants portent les mêmes références que ci-dessus.

Pour obtenir un actionnement séquentiel (accrochage puis poussée axiale) comme précédemment, la fermeture de l'interrupteur général 32 alimente uniquement les vérins 10. Lorsque ceux-ci se sont étendus d'une longueur prédéterminée, ou lorsqu'une force résistante prédéterminée est atteinte, des dispositifs de fin de course appropriés coupent l'alimentation électrique de ces vérins 10 et provoquent l'alimentation des vérins 20, comme schématisé sur la Figure 4. De nouveau, des dispositifs de fin de course appropriés coupent l'alimentation électrique des vérins 20 après une course d'extension prédéterminée ou lorsqu'une force résistante prédéterminée est atteinte.

Dans ce cas, après le contrôle du train roulant, une alimentation électrique inverse est nécessaire pour faire reculer le plateau 27 puis écarter les bras 16. Le circuit électrique comporte donc des moyens appropriés (non représentés) pour réaliser ces opérations.

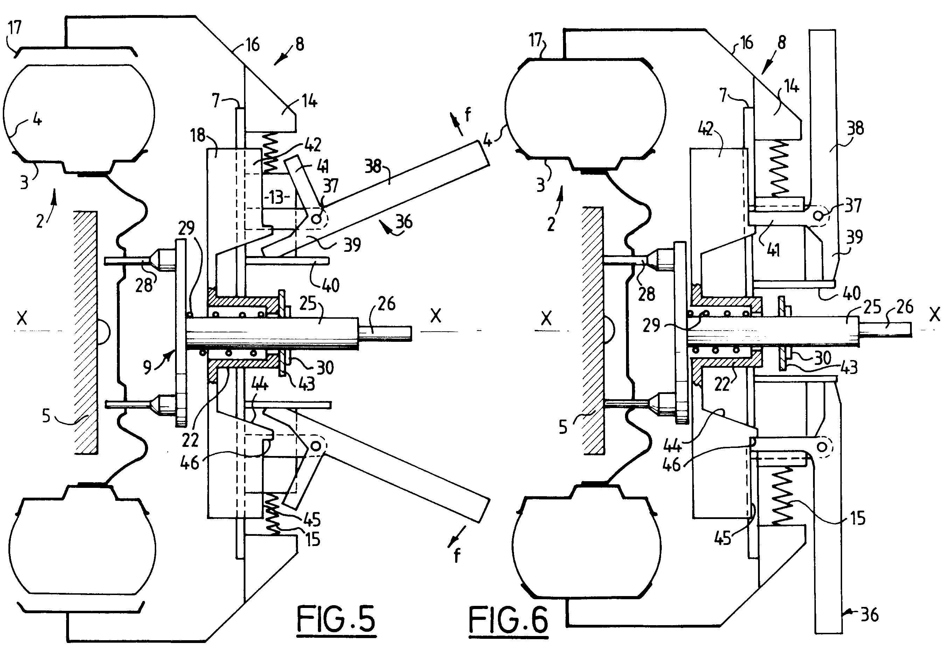

Le mode de réalisation des Figures 5 et 6 diffère des précédents par le fait que l'actionnement séquentiel des coulisseaux 13 puis du croisillon 18 est obtenu manuellement, de manière purement mécanique.

Pour cela, pour chaque moitié du dispositif 8, il est prévu un levier 36 articulé sur le cadre 7 au voisinage du coulisseau 13, autour d'un axe 37 perpendiculaire à l'axe X-X. Ce levier comporte une longue branche de manoeuvre 38 qui s'étend vers l'arrière, et deux branches d'actionnement beaucoup plus courtes : une branche 39, prolongeant la branche 38 vers l'avant, qui prend appui sur la face radialement extérieure d'une plaquette 40, parallèle à l'axe X-X, solidaire du coulisseau 13; et une branche 41, perpendiculaire à la branche 39 et dirigée radialement vers l'extérieur sensiblement à partir de l'axe 37.

De plus, dans le plan de chaque levier 36, le croisillon 18 comporte une protubérance 42 dirigée vers l'arrière et traversant le cadre 7. Des faibles ressorts de rappel non représentés s'appuyant sur le cadre 7 sollicitent les coulisseaux 13 radialement vers l'extérieur, et une rondelle 43 de diamètre supérieur au diamètre extérieur de la douille est intercalée entre celle-ci et la goupille 30. Ainsi, le débattement axial du cadre 7 est limité vers l'avant par le croisillon 18 et vers l'arrière par la rondelle 43.

Au repos (Figure 5), la branche 39 de chaque levier est prise en sandwich entre la plaquette 40 et une surface de came oblique 44 de la protubérance 42, tandis que la branche 41 est libre et espacée de cette dernière.

Après avoir introduit les doigts 28 dans les trous 6 de la jante (Figure 5), l'opérateur amène ces doigts en appui sur le moyeu, puis il écarte l'une de l'autre les deux branches 38, dans le sens des flèches f de la Figure 5.

Dans un premier temps, les deux branches 39 poussent radialement vers l'intérieur les deux coulisseaux 13, ce qui amène les griffes 17 en prise ferme sur le pneu. Lorsque cette prise est assurée, les deux branches 41 sont venues simultanément en contact avec une surface radiale 45 des protubérances 42 et ont éventuellement fait reculer le cadre 7. La poursuite du basculement des deux leviers pousse le croisillon 18 vers la roue en comprimant le ressort 29, en renforçant en même temps le serrage des griffes 17 sur le pneu.

La position finale, stable grâce au positionnement des branches 39 et 41 par rapport aux axes 37, est illustrée sur la Figure 6 : les deux branches 41 sont parallèles à l'axe X-X, en butée contre un épaulement radial 46 des protubérances 42, et les branches 38 et 40 sont perpendiculaires à cet axe.

Le mouvement inverse des deux leviers, comme on le comprendra, fait reculer dans un premier temps le plateau 27 puis, dans un second temps, écarte les bras 16, ce qui permet de retirer le support 1 de la roue.

## Revendications

1. Dispositif de contrôle de train roulant de véhicule automobile, du type comprenant un support (1) qui comprend lui-même un cadre de montage (7) portant :
- un dispositif (8) d'accrochage du cadre (7) sur la roue (2), et
- un dispositif (9) de poussée vers la roue d'un plateau (27) muni d'une série de doigts d'appui (28) parallèles à l'axe (X-X) du support, adaptés pour traverser des trous (6) de la roue,
caractérisé en ce qu'il comprend des moyens (10, 20, 39, 41) pour actionner séquentiellement le dispositif d'accrochage (8) puis le dispositif de poussée (9).

2. Support suivant la revendication 1, caractérisé en ce que le dispositif d'accrochage (8) et le dispositif de poussée (9) comprennent chacun un vérin à fluide (10, 20), une extrémité du vérin (10) du dispositif d'accrochage pouvant être reliée à une source de fluide sous pression et un point intermédiaire du corps (11) du même vérin étant relié à une extrémité du vérin (20) du dispositif de poussée.

3. Support suivant la revendication 2, caractérisé en ce que les vérins (10, 20) sont à simple effet et rappelés par des ressorts (34, 35).

4. Support suivant la revendication 1, caractérisé en ce que le dispositif d'accrochage (8) et le dispositif de poussée (7) comprennent chacun un vérin à vis (10, 20) à actionnement électrique, le vérin (10) du dispositif d'accrochage comprenant des moyens pour, en fin de course, ouvrir son circuit d'alimentation en courant électrique et fermer simultanément celui du vérin (20) du dispositif de poussée.

5. Support suivant la revendication 2 ou 4, caractérisé en ce qu'il est prévu des moyens d'actionnement séquentiel dans l'ordre inverse des vérins (10, 20) pour retirer le support (1) de la roue (2) lorsque le contrôle du train roulant a été effectué.

6. Support suivant la revendication 1, caractérisé en ce qu'il comprend un levier (36) articulé sur le cadre (7) et présentant deux branches d'actionnement (39, 41), la première branche (39) agissant sur un bras (16) d'accrochage du support sur la roue et la seconde branche (41) étant agencée pour agir sur le plateau (27) après une course prédéterminée du levier.

7. Support suivant la revendication 6, caractérisé en ce que les deux branches d'actionnement (39, 41) sont perpendiculaires l'une à l'autre.

8. Support suivant la revendication 6 ou 7, caractérisé en ce qu'il est prévu deux leviers (36) montés symétriquement par rapport à l'axe (X-X) du support (1).

9. Support suivant l'une quelconque des revendications 1 à 8, caractérisé en ce que le dispositif d'accrochage (8) et/ou le dispositif de poussée (9) agissent sur la roue et/ou sur le plateau (27) par l'intermédiaire d'un ressort (15, 29).

## Claims

1. Vehicle axle testing device, of the type comprising a support (1) which in turn comprises an assembly frame (7) having:
a device (8) for attaching the frame (7) to the wheel (2), and
a device (9) for pushing a plate (27) towards the wheel, said plate being provided with a series of pressing fingers (28) parallel to the axis (X-X) of the support, adapted to pass through holes (6) in the wheel, characterised in that it comprises means (10, 20, 39, 41) for sequentially actuating the attachment device (8) and then the pushing device (9).

2. Support according to claim 1, characterised in that the attachment device (8) and the pushing device (9) each comprise a hydraulic jack (10, 20), one end of the jack (10) of the attachment device being connectable to a pressurised fluid source and an intermediate point on the body (11) of said same jack being connected to one end of the jack (20) of the pushing device.

3. Support according to claim 2, characterised in that the jacks (10, 20) are single-acting and are restored by springs (34, 35).

4. Support according to claim 1, characterised in that the attachment device (8) and the pushing device (7) each comprise an electrically operated screw jack (10, 20), the jack (10) of the attachment device comprising means for opening its electrical supply circuit, at the end of its travel, and simultaneously closing that of the jack (20) of the pushing device.

5. Support according to claim 2 or 4, characterised in that means for sequentially actuating the jacks (10, 20) in reverse order are provided in order to withdraw the support (1) from the wheel (2) when the axle has been checked.

6. Support according to claim 1, characterised in that it comprises a lever (36) articulated on the frame (7) and having two operating arms (39, 41), the first arm (39) acting on a strap (16) for attaching the support to the wheel and the second arm (41) being designed to act on the plate (27) after the lever has moved a certain distance.

7. Support according to claim 6, characterised in that the two operating arms (39, 41) are perpendicular to one another.

8. Support according to claim 6 or 7, characterised in that two levers are provided, mounted symmetrically with respect to the axis (X-X) of the support (1).

9. Support according to any one of claims 1 to 8, characterised in that the attachment device (8) and/or the pushing device (9) act on the wheel and/or on the plate (27) via a spring (15, 29).

## Patentansprüche

1. Prüfeinrichtung für die Fahrzeugachse eines Kraftfahrzeuges von der Art, welche eine Halterung (1) aufweist, die wiederum einen Montagerahmen (7) enthält, der folgendes trägt:
- eine Vorrichtung (8) für die Befestigung des Rahmens (7) am Rad (2), und
- eine Vorrichtung (9) für die Verschiebung einer Platte (27) gegen das Rad, welche mit einer Vielzahl von Stützfingern (28) versehen ist, die parallel zur Achse X-X der Halterung verlaufen und die Bohrungen (6) des Rades durchqueren können,
**dadurch gekennzeichnet**, **daß**
sie Mittel (10, 20, 39, 41) aufweist, um nacheinander erst die Befestigungsvorrichtung (8) und dann die Schubvorrichtung (9) zu betätigen.

2. Halterung nach Anspruch 1,
**dadurch gekennzeichnet**, **daß**
die Befestigungsvorrichtung (8) und die Schubvorrichtung (9) jeweils ein mit einem Fluid gespeistes Stellglied (10, 20) aufweisen, so daß ein Ende des Stellgliedes (10) der Befestigungsvorrichtung an eine unter Druck stehende Fluidquelle angeschlossen werden kann und daß ein Zwischenpunkt des Körpers (11) des gleichen Stellgliedes an ein Ende des Stellgliedes (20) der Schuhvorrichtung angeschlossen ist.

3. Halterung nach Anspruch 2,
**dadurch gekennzeichnet**, **daß**
die Stellglieder (10, 20) einstufig arbeiten und mit Hilfe von Federn (34, 35) zurückgezogen werden.

4. Halterung nach Anspruch 1,
**dadurch gekennzeichnet**, **daß**
die Befestigungsvorrichtung (8) und die Schubvorrichtung (7) jeweils einen elektrisch betätigten Schraubenzylinder (10, 20) aufweisen, und daß das Stellglied (10) Mittel aufweist, um in der Endstellung seinen elektrisch gespeisten Versorgungskreis zu öffnen und gleichzeitig den Speisekreis des Stellgliedes (20) der Schubvorrichtung zu schließen.

5. Halterung nach einem der Ansprüche 2 oder 4,
**dadurch gekennzeichnet**, **daß**
sequentielle Betätigungsmittel in umgekehrter Reihenfolge der Stellglieder (10, 20) vorgesehen sind, um die Halterung (1) Von dem Rad (2) abzuziehen, nachdem die Kontrolle der Fahrzeugachse abgeschlossen ist.

6. Halterung nach Anspruch 1,
**dadurch gekennzeichnet**, **daß**
sie einen an dem Rahmen (7) angelenkten Hebel (36) aufweist, welcher zwei Betätigungsgriffe (39, 41) aufweist, wobei der erste dieser Griffe (39) auf einen Arm (16) für die Befestigung der Halterung am Rad einwirkt und der zweite Griff (41) so angeordnet ist, daß er nach einer vorbestimmten Hubbewegung des Hebels auf die Platte (27) einwirkt.

7. Halterung nach Anspruch 6,
**dadurch gekennzeichnet**, **daß**
die beiden Betätigungsgriffe (39, 41) jeweils senkrecht zueinander liegend angeordnet sind.

8. Halterung nach einem der Ansprüche 6 oder 7,
**dadurch gekennzeichnet**, **daß**
zwei Hebel (36) vorgesehen sind, welche symmetrisch gegenüber der Achse (X-X) der Halterung (1) montiert sind.

9. Halterung nach einem der Ansprüche 1 bis 8,
**dadurch gekennzeichnet**, **daß**
die Befestigungsvorrichtung (8) und/oder die Schubvorrichtung (9) über eine Feder (15, 29) auf das Rad und/oder die Platte (27) einwirken.
